# NEUE EUROPÄISCHE PATENTSCHRIFT

(11) **EP 2 454 797 B2**
(45) Veröffentlichungstag und Bekanntmachung des Hinweises auf die Entscheidung über den Einspruch: **05.01.2022**
(45) Hinweis auf die Patenterteilung: 10.05.2017
(21) Anmeldenummer: 10726982.1
(22) Anmeldetag: 30.06.2010
(51) Int. Cl.: B60L 53/12, B60L 53/39, B60L 53/124, B60L 3/00, H02J 7/02

(54) **VORRICHTUNG ZUR INDUKTIVEN ÜBERTRAGUNG ELEKTRISCHER ENERGIE**
DEVICE FOR THE INDUCTIVE TRANSFER OF ELECTRIC ENERGY
DISPOSITIF DE TRANSMISSION INDUCTIVE D'ÉNERGIE ÉLECTRIQUE

(30) Priorität: 14.07.2009 DE 102009033237
(43) Veröffentlichungstag der Anmeldung: 23.05.2012
(73) Patentinhaber: Conductix-Wampfler GmbH, 79576 Weil am Rhein-Märkt (DE)
(72) Erfinder: WECHLIN, Mathias, 79400 Kandern (DE); GREEN, Andrew, 79429 Malsburg-Marzell (DE)
(74) Vertreter: Charrier Rapp & Liebau
(86) Internationale Anmeldenummer: PCT/EP2010/059294
(87) Internationale Veröffentlichungsnummer: WO 2011/006758

(56) Entgegenhaltungen:
- EP-A2- 0 788 212
- WO-A1-2008/032746
- WO-A1-2008/050260
- WO-A1-2009/081115
- WO-A2-2008/051611
- WO-A2-2008/051611
- DE-T2- 3 782 281
- JP-A- H10 215 530
- JP-A- 2000 134 830
- US-A1- 2009 096 413
- "Overview of different alternatives for the contact-less transmission of energy", IECON 2002, 28TH ANNUAL CONFERENCE OF THE IEEE INDUSTRIAL ELECTRONICS SOCIETY, 2002, pages 1318 - 1323, Retrieved from the Internet <URL:https://doi.org/10.1109/IECON.2002.11 85466>

## Beschreibung

Die Erfindung betrifft eine Vorrichtung zur induktiven Übertragung elektrischer Energie nach dem Oberbegriff des Anspruchs 1. Derartige Vorrichtungen dienen der induktiven Ladung einer in einem Elektrofahrzeug eingebauten, wiederaufladbaren Batterie. Während der Energieübertragung wird zwischen einer stationären Primärspule und einer fahrzeugseitigen Sekundärspule ein magnetisches Feld hoher Feldstärke und Flussdichte aufgebaut. Dies ist notwendig, um in der Sekundärspule einen für die angestrebte Übertragungsleistung ausreichend hohen Strom zu induzieren.

Werden Gegenstände aus metallischen Werkstoffen in den Bereich eines solchen Feldes eingebracht, so werden in diesen Wirbelströme induziert, die zu einer von Material, Dauer der Einbringung und Höhe der Feldstärke abhängigen Erwärmung führen. Bei Vorhandensein entsprechender Bedingungen kann ein solcher Gegenstand eine Temperatur erreichen, die zu Beschädigungen, z.B. zum Einschmelzen in Kunststoffoberflächen, oder zu Gefährdungen von Personen führen können. Letztere treten insbesondere dann auf, wenn die Sekundärseite entfernt wurde und erwärmte Metallgegenstände frei zugänglich sind und von Personen berührt werden können.

Aufgrund der Charakteristik bisheriger Anwendungen für induktive Energieübertragungssysteme wurde eine entsprechende Gefährdung durch metallische Fremdkörper als nicht relevant bewertet oder beispielsweise bei Flurförderzeugen (AGV) durch vor den sekundärseitigen Abnehmern angebrachte Bürsten versucht, solche Gegenstände aus kritischen Feldbereichen zu entfernen. Bei Fahrzeugen mit Fahrer kann im Rahmen einer Schulung darauf hingewiesen werden, im Betrieb auf solche Gegenstände zu achten und diese vor Inbetriebnahme der induktiven Übertragung zu entfernen oder die induktive Übertragung im Zweifelsfall nicht in Betrieb zu nehmen. Für einen weitgehend automatischen Betrieb oder bei höheren Sicherheitsanforderungen, von denen insbesondere beim Einsatz derartiger Systeme in öffentlich zugänglichen Bereichen auszugehen ist, erscheinen die bisherigen Sicherheitsmaßnahmen als ungeeignet oder zumindest unzureichend.

Aus der US 2007/0145830 A1 ist ein System zur kontaktlosen Übertragung elektrischer Energie zu elektronischen Geräten bekannt, das eine Vielzahl von Primärspulen aufweist. Hierdurch erübrigt sich eine genaue Ausrichtung zwischen Primär- und Sekundärspule. In der Schrift wird zwar unter anderem das Problem der Präsenz metallischer Fremdkörper angesprochen, der Einsatz eines Metalldetektors jedoch als unbrauchbar verworfen. Vielmehr wird durch schaltungstechnische Maßnahmen erreicht, dass das System erst bei Annäherung eines Schwingkreises aus einer Sekundärspule und einem parallelgeschalteten Abgleichkondensator in Resonanz gerät und der Primärstrom dadurch stark ansteigt, wobei er sich im wesentlichen auf eine oder wenige Primärspulen in unmittelbarer Nähe der Sekundärspule konzentriert. Ein leitfähiger Fremdkörper ist in diesem Fall kein Problem mehr, da er keinen resonanzfähigen Schwingkreis darstellt.

Aus der WO 2009/081115 A1 ist ein Verfahren bekannt, bei dem durch die Primäreinheit eines Systems zur induktiven Übertragung elektrischer Energie ein Signal in eine oder mehrere zur Energieübertragung vorgesehene Primärspulen eingespeist und die Amplitude dieses Signals sprunghaft von einem ersten Wert auf einen zweiten Wert geändert wird. Die Auswirkung dieser Änderung auf eine elektrische Kenngröße der Primäreinheit wird dann ermittelt und anhand dieser ermittelten Auswirkung wird detektiert, ob benachbart zu der Primäreinheit eine Sekundäreinheit oder ein Fremdkörper vorhanden ist.

Aus der WO 2008/050260 A1 ist eine Vorrichtung zur induktiven Übertragung elektrischer Energie mit einer Vielzahl von Primärinduktivitäten bekannt, bei der jeder Primärinduktivität ein Detektorschaltkreis zugeordnet ist, der das Vorhandensein einer Sekundärseite benachbart zu einer Primärinduktivität berührungslos anhand eines elektromagnetischen Feldes feststellt und nur in diesem Fall eine Bestromung der zugehörigen Primärinduktivität freischaltet. Hierzu ist sekundärseitig ein magnetischer Feldknoten vorgesehen, der ein von dem Detektorschaltkreis erzeugtes Magnetfeld moduliert oder selbst ein stationäres Magnetfeld erzeugt. Bei einer weiteren Ausführungsform ist das elektromagnetische Feld ein RFID-Signal. Eine Verwechslung eines leitfähigen Fremdkörpers mit besagtem magnetischen Feldknoten ist aufgrund der Funktionsweise des Detektorschaltkreises ausgeschlossen, so dass sich eine gezielte Detektion des Vorhandenseins eines solchen Fremdkörpers erübrigt.

Der Erfindung liegt die Aufgabe zugrunde, eine neue und zweckmäßige Vorrichtung zur Detektion elektrisch leitfähiger Fremdkörper im Bereich der Primärinduktivität eines induktiven Energieübertragungssystems zu schaffen, um die Betriebssicherheit eines solchen Systems zu verbessern.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Erfindungsgemäß verfügt bei einer Vorrichtung zur induktiven Übertragung elektrischer Energie von einer stationären Einheit mit mindestens einer Primärinduktivität zu einem benachbart zu dieser stehenden Fahrzeug mit mindestens einer Sekundärinduktivität die stationäre Einheit über eine Einrichtung zur Detektion des Vorhandenseins eines elektrisch leitfähigen metallischen Gegenstandes innerhalb eines vorbestimmten, an die Primärinduktivität angrenzenden Raumes, der während der induktiven Energieübertragung zwischen der Primärinduktivität und der Sekundärinduktivität liegt. Die Einrichtung weist mindestens eine Messinduktivität, die separat von der Primärinduktivität ausgebildet und benachbart zu der Primärinduktivität auf derjenigen Seite der Primärinduktivität angeordnet ist, welche während der induktiven Energieübertragung der Sekundärinduktivität zugewandt ist, sowie eine Messeinrichtung zur Messung der Impedanz der Messinduktivität und eine mit der Messeinrichtung verbundene Auswertungseinrichtung auf. Es sind eine Vielzahl von Messinduktivitäten vorgesehen, die eine regelmäßige zweidimensionale Anordnung bilden, die sich zumindest annähernd in einer Ebene erstreckt, welche senkrecht zur Hauptrichtung des von der Primärinduktivität im Betrieb erzeugten Magnetfeldes liegt, und anhand der Verteilung der Vielzahl von Messinduktivitäten werden Rückschlüsse auf die Größe und die Position des metallischen Gegenstandes gezogen und somit erfolgt eine näherungsweise Positionsbestimmung des metallischen Gegenstandes. Wird die Reichweite der Detektionseinrichtung größer gewählt, so ist über die Präsenz von leitfähigen Fremdkörpern in unmittelbarer Nähe der Primärinduktivität hinaus auch die Präsenz eines Fahrzeugs im Bereich der Primärinduktivität feststellbar.

Es ist eine Sensorik auf induktiver Basis, d.h. mit einer Impedanzmessung an einer Messinduktivität vorgesehen, da sich eine solche besonders gut zur Unterscheidung zwischen leitfähigen und nicht leitfähigen Gegenständen eignet. Eine höhere Empfindlichkeit und eine näherungsweise Positionsbestimmung eines metallischen Gegenstandes erlaubt die Verwendung einer regelmäßigen zweidimensionalen Anordnung einer Vielzahl separater Messinduktivitäten. Diese können beispielsweise als planare Spulen ausgebildet sein, die sich kostengünstig in großer Zahl auf einem gemeinsamen Substrat herstellen lassen.

Die Auswertungseinrichtung kann eine Verteilung der Impedanzen der einzelnen Messinduktivitäten oder Gruppen von Messinduktivitäten mit einer Referenzverteilung vergleichen. Bei Vorliegen einer Abweichung vorbestimmten Ausmaßes kann ein Signal ausgegeben werden, welches die Abweichung anzeigt. Dieses Signal kann auf einer Anzeigeeinrichtung ausgegeben werden und/oder zur Deaktivierung der Stromversorgung der Primärinduktivität verwendet werden.

Nachfolgend werden Ausführungsbeispiele der Erfindung anhand der Zeichnungen beschrieben. In diesen zeigt
- Fig. 1: eine schematische Darstellung einer Ladestation zur induktiven Energieübertragung mit einem in Ladeposition befindlichen Elektrofahrzeug,
- Fig. 2: eine schematische Darstellung einer erfindungsgemäßen Sensorik zur Detektion leitfähiger Fremdkörper.

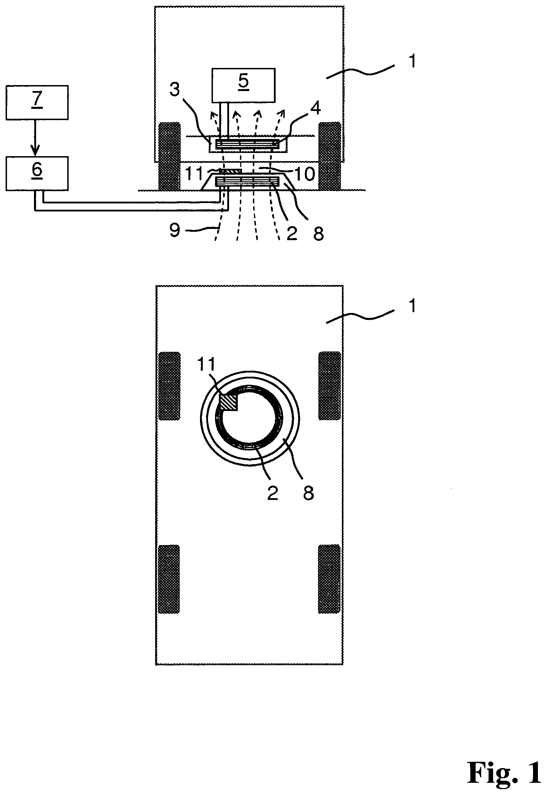

Fig. 1 zeigt ein Elektrofahrzeug 1, welches zum Aufladen seiner Batterie über der Primärspule 2 einer Ladestation steht, in einer schematischen Schnittansicht (oben) und in einer schematischen Draufsicht (unten). An der Unterseite des Fahrzeugs 1 befindet sich in einem Gehäuse 3 eine Sekundärspule 4, die mit einer Ladeelektronik 5 verbunden ist. Diese wandelt die Parameter der induktiv in die Sekundärspule 4 übertragenen elektrischen Leistung in zur Ladung der Batterie des Fahrzeugs 1 geeignete Werte. Die Primärspule 2 wird von einer Stromversorgungseinheit 6 der Ladestation gespeist und ist in einem Gehäuse 8 untergebracht, welches stationär an einem Fahrzeugabstellplatz angebracht ist. Die Stromversorgungseinheit 6 wird von einer Steuereinheit 7 der Ladestation gesteuert.

Gestrichelt sind in Fig. 1 einige Feldlinien 9 des von der Primärspule 2 im Betrieb erzeugten magnetischen Wechselfeldes angedeutet. Seine Hauptrichtung entspricht der Richtung der Spulenachse der Primärspule 2 und ist somit die Vertikalrichtung. In dem Zwischenraum 10 unmittelbar oberhalb des Gehäuses 8 der Primärspule 2 herrscht im Betrieb eine hohe magnetische Feldstärke und Flussdichte.

Auf dem Gehäuse 8 der Primärspule 2 liegt ein metallischer Gegenstand 11. Dieser kann sich beispielsweise von einem anderen Fahrzeug, welches vor dem Fahrzeug 1 an der Ladestation gestanden hat, gelöst haben. Es könnte sich auch um einen von einer Person verlorenen Gebrauchgegenstand oder um eine leere Getränkedose handeln. Nicht zuletzt könnte der Gegenstand 11 auch von einer Person in Sabotageabsicht absichtlich dort deponiert worden sein. Wie eingangs bereits dargelegt, würde sich der Gegenstand bei einer Bestromung der Primärspule 2 infolge der in ihm induzierten Wirbelströme erhitzen und dadurch zu einer Gefahrenquelle werden. Im übrigen würde durch ihn die Effizienz der Energieübertragung zu der Sekundärspule 4 beeinträchtigt.

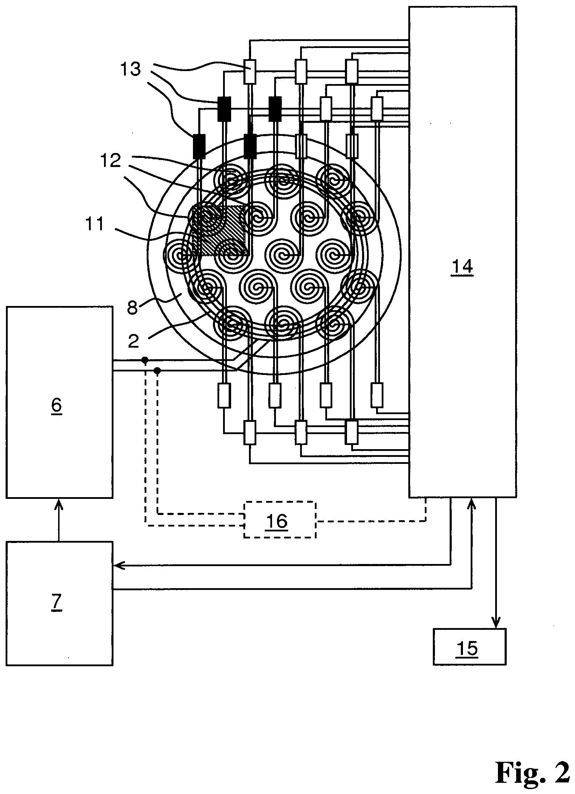

Wie die vorliegende Erfindung dieses Problem behebt, wird nachfolgend anhand Fig. 2 erläutert. Diese zeigt eine schematische Draufsicht auf eine Ladestation der anhand Fig. 1 erläuterten Art mit einer Primärspule 2 in einem Gehäuse 8, die mit einer Stromversorgungseinheit 6 verbunden ist. Um den metallischen Fremdkörper 11 zu dektektieren, sind in dem Gehäuse 8 zwischen dessen oberer Wand und der Primärspule 2 eine Vielzahl von Messspulen 12 angeordnet. Diese Messspulen 12 sind jeweils wesentlich kleiner als die Primärspule 2. Sie sind in dem gezeigten Beispiel planar ausgelegt und können beispielsweise in Form von Leiterbahnen auf einer Leiterplatte oder einer Folie realisiert sein, die von innen an der oberen Wand des Gehäuses 8 befestigt ist. Auch könnten die Messspulen 12 als direkt auf der inneren Oberfläche der Oberseite des Gehäuses 8 verlaufende Leiterbahnen ausgeführt sein.

Die Messspulen 12 bilden eine regelmäßige zweidimensionale Anordnung nach Art einer Matrix mit gleichem Rastermaß in den Reihen und Spalten. Dabei sind jedoch aufeinanderfolgende Reihen jeweils um ein halbes Rastermaß gegeneinander versetzt, wodurch sich gegenüber einer klassischen Matrixanordnung eine höhere Packungsdichte erzielen lässt. In Fig. 2 hat es den Anschein, dass die Zuleitungen mancher Messspulen 12 durch andere Messspulen 12 hindurch verlaufen, was tatsächlich nicht der Fall ist. Um dies trotz hoher Packungsdichte zu vermeiden, können die Messspulen 12 insbesondere auf zwei verschiedene Seiten einer Leiterplatte oder Folie verteilt sein. Die Darstellung von Fig. 2 ist insofern nicht als wirklichkeitsgetreu, sondern als schematisch zu verstehen.

Die Messspulen 12 sind jeweils mit einer Impedanzmesseinrichtung 13 verbunden. Diese Impedanzmesseinrichtungen 13 sind an eine zentrale Auswertungseinrichtung 14 angeschlossen. Wenn keine Energieübertragung stattfindet, die Ladestation sich aber im Bereitschaftszustand befindet, werden die Messspulen 12 mit einem Messstrom vorbestimmter Stärke beaufschlagt. Dieser erzeugt um jede Messspule 12 herum ein Messfeld, das in einem auf dem Gehäuse 8 über der jeweiligen Messspule liegenden metallischen Fremdkörper 11 Wirbelströme erzeugt. Die magnetische Rückwirkung dieser Wirbelströme auf die jeweilige Messspule 12 äußert sich in einer Änderung der Impedanz. Die Impedanz jeder Messspule 12 wird durch die ihr jeweils zugeordnete Impedanzmesseinrichtung 13 permanent gemessen.

Die von den einzelnen Impedanzmesseinrichtungen 13 gelieferten Messwerte werden in einer Auswertungseinrichtung 14 ständig untereinander und ggf. auch mit einem Referenzwert verglichen. Bei der in Fig. 2 dargestellten Situation, in der ein metallischer Fremdkörper 11 vier der Messspulen 12 zumindest teilweise überdeckt, liefern die vier in Fig. 2 schwarz gekennzeichneten Impedanzmesseinrichtungen 13, die diesen überdeckten Messspulen 12 zugeordnet sind, andere Impedanzwerte an die Auswertungseinrichtung 14 als die übrigen Impedanzmesseinrichtungen 13, die nicht überdeckten Messspulen 13 zugeordnet sind. Dabei hängt das Ausmaß der Impedanzabweichung außer von der Leitfähigkeit und der Form des Fremdkörpers 11 auch vom jeweiligen Ausmaß der Überdeckung einer Messspule 12 durch den Fremdkörper 11 ab. In der in Fig. 2 dargestellten Situation ist eine der Messspulen 12 von dem Fremdkörper 11 nahezu völlig überdeckt, eine andere etwa zur Hälfte und zwei weitere jeweils nur zu einem kleineren Teil, was zur Folge hat, dass die vier in Fig. 2 schwarz gekennzeichneten Impedanzmesseinrichtungen 13 unterschiedliche Impedanzänderungen messen.

Alternativ zu einer Zuordnung je einer eigenen Impedanzmesseinrichtung 13 zu jeder einzelnen Messspule 12, wie sie in Fig. 2 dargestellt ist, könnten die Messspulen 12 auch gruppenweise zusammengeschaltet werden, so dass jeder Gruppe eine Impedanzmesseinrichtung 13 zugeordnet wäre, welche die resultierende Gesamtimpedanz der Gruppe messen würde. Auf diese Weise würden weniger Impedanzmesseinrichtungen 13 benötigt, jedoch würde die Ortsauflösung der Messung schlechter.

Weiterhin alternativ könnten mehrere Messspulen 12 oder Gruppen solcher mit einer gemeinsamen Impedanzmesseinrichtung 13 gemessen werden, indem der Impedanzmesseinrichtung 13 ein Analogmultiplexer vorgeschaltet würde. Hierdurch würden noch weniger Impedanzmesseinrichtungen 13 benötigt, im Grundsatz nur noch eine einzige. Ein Multiplexbetrieb wäre natürlich mit einer Vervielfachung der für eine komplette Erfassung der Impedanzen aller Messpulen 12 benötigten Zeit verbunden. Da jedoch der Fahrzeugwechsel an einer Ladestation kein sehr schneller Vorgang ist, könnte dies dennoch akzeptabel sein.

Durch die Verteilung einer Vielzahl von Messspulen 12 über die Oberseite des Gehäuses 8 ist es möglich, Rückschlüsse auf die Größe und die Position eines metallischen Gegenstandes zu ziehen, wenn die Impedanzen der Messspulen 12 zumindest gruppenweise oder, wie in Fig. 2 angenommen, jeweils einzeln gemessen werden. Außerdem erhöht sich dadurch die Empfindlichkeit, da ein relativ kleiner Fremdkörper 11, der beispielsweise nur eine einzige Messspule 12 oder eine kleine Gruppe von diesen überdeckt, bei dieser Messspule 12 oder Gruppe bereits eine signifikante Impedanzänderung verursacht, während er bei einer einzigen großen Messspule, deren Messfeld die gesamte Oberseite des Gehäuses 8 ausfüllen müsste, nur eine vergleichsweise geringe Impedanzänderung verursachen würde, die wesentlich schwieriger zuverlässig zu detektieren wäre.

Unabhängig von der Anzahl der Messspulen 12 und deren eventueller Zusammenfassung zu Gruppen gibt die Auswertungseinrichtung 14 immer dann, wenn die gemessene Impedanzverteilung von einer gespeicherten Referenzverteilung über ein vorbestimmtes Mindestmaß hinaus abweicht, ein Ausgangssignal an eine Anzeigeeinrichtung 15 aus, welche eine optische und/oder akustische Warnung abgibt. Darüber hinaus ist die Auswertungseinrichtung 14 auch mit der Steuereinheit 7 der Ladestation verbunden verbunden und gibt an diese ein Signal aus, welches die Einleitung einer Energieübertragung, d.h. eine Bestromung der Primärspule 2 blockiert. Bleibt die festgestellte Abweichung vom Sollzustand über einen längeren Zeitraum bestehen, so wird eine Meldung an eine zuständige Stelle, z.B. an den Betreiber der Ladestation abgesetzt. Die Energieübertragung kann erst wieder in Betrieb gesetzt werden, nachdem eine Bereinigung des fehlerhaften Zustandes durch Wartungspersonal quittiert wurde.

Da die Messspulen 12 im Betrieb der induktiven Energieübertragung dem starken Magnetfeld der Primärspule 2 ausgesetzt sind, muss verhindert werden, dass in ihnen hierdurch hohe Ströme induziert werden. Hierzu müssen die Impedanzmesseinrichtungen 13 vor Beginn der Energieübertragung abgeschaltet werden und die Messspulen 12 müssen in den Leerlauf geschaltet werden. Zu diesem Zweck gibt die Streuereinheit 7 rechtzeitig vor der Einschaltung eines Primärstromes ein entsprechendes Signal an die Auswertungseinrichtung 14 aus, welche die Messseinrichtungen 13 zu besagter Abschaltung sowie zur Umschaltung der Messspulen 12 in den Leerlauf veranlasst.

Eine gegenüber der vorausgehend beschriebenen Ausführungsform der Erfindung stark vereinfachte Variante einer Fremdkörperdetektion besteht in der nicht zur Erfindung gehörigen Verwendung der Primärspule 2 als einziger Messspule. Hierzu wird in die Primärspule 2 ständig ein minimaler Strom eingespeist, der dazu ausreicht, ein magnetisches Feld geringer Stärke als Messfeld um die Primärspule 2 herum aufzubauen. Die Impedanz der Primärspule 2 wird mittels einer geeigneten Messvorrichtung 16, die in Fig. 2 gestrichelt eingezeichnet ist, ständig gemessen. Bei dieser Variante entfallen die separaten Messspulen 12 und die zugehörigen Impedanzmesseinrichtungen 13.

Es versteht sich, dass unter Verwendung der Primärspule 2 als einzigem induktivem Messaufnehmer nur eine vergleichsweise grobe Überwachung des Gehäuses 8 auf die Präsenz eines metallischen Fremdkörpers 11 möglich ist, d.h. dass hiermit nur vergleichsweise größere Fremdkörper 11 zuverlässig detektiert werden können. Ferner ist aus einer Impedanzänderung der Primärspule 2 kein Rückschluss auf die Lage des Fremdkörpers 11 und nur ein eingeschränkter Rückschluss auf dessen Abmessungen möglich. Dafür ist der Aufwand an zusätzlicher Hardware in der soeben beschriebenen nicht zur Erfindung gehörigen Variante im Vergleich zu der zuvor beschriebenen Ausführungsform der Erfindung mit einer Matrix von separaten Messspulen 12 deutlich geringer.

In jedem Fall ist bei der Festlegung der Stärke des Messfeldes und damit auch seiner räumlichen Ausdehnung darauf zu achten, dass es nur einen begrenzten vertikalen Bereich, beispielsweise bis ca. 50 mm über dem Gehäuse 8, abdeckt. So kann verhindert werden, dass auch durch das Abstellen eines Fahrzeugs 1 über dem Gehäuse 8 eine Impedanzänderung der Messspulen 12 verursacht und von der Auswertungseinrichtung 14 als Vorhandensein eines metallischen Fremdkörpers 11 fehlinterpretiert wird. Ferner muss bei der Festlegung der Feldstärke des Messfeldes bedacht werden, dass sie nicht dazu ausreichen darf, einen metallischen Gegenstand 11 soweit zu erwärmen, dass Schäden oder Gefährdungen entstehen können.

Bei der beschriebenen Ausführungsform der Erfindung kann anhand der räumlichen Verteilung der Impedanzänderungen und/oder anhand deren Ausmaßen auch die Präsenz eines Fahrzeugs 1 über der Primärspule 2 erkannt und von derjenigen eines metallischen Fremdkörpers 11 unterschieden werden. Im Sinne der vorliegenden Erfindung stellt nämlich auch ein Fahrzeug 1 einschließlich seiner Sekundärspule 4 nichts anderes als eine spezielle Art von metallischem Gegenstand dar. In diesem Fall ist das Messfeld so auszulegen, dass auch ein größerer vertikaler Bereich überwacht werden kann, beispielsweise bis ca. 300 mm über dem Gehäuse 8. Ein von der Auswertungseinrichtung 14 an die Steuereinheit 7 ausgegebenes Signal zeigt in diesem Fall an, ob es sich um einen Fremdkörper 11 oder um ein Fahrzeug 1 handelt.

Die gemeldete von der Auswertungseinheit 14 gemeldete Erkennung eines Fahrzeugs 1 kann von der Steuereinheit 7 beispielsweise dazu benutzt werden, den Energieübertragungsvorgang einzuleiten. Andererseits lässt sich auf diese Weise auch der Versuch erkennen, ein nicht zu ladendes Fahrzeug 1 an der Ladestation abzustellen. Im letztgenannten Fall können dann Maßnahmen eingeleitet werden, um das endgültige Abstellen des Fahrzeugs 1 zu verhindern und so die Lademöglichkeit für andere Fahrzeuge, die einen Ladebedarf haben, freizuhalten.

## Patentansprüche

1. Vorrichtung zur induktiven Übertragung elektrischer Energie von einer stationären Einheit mit mindestens einer Primärinduktivität (2) zu einem benachbart zu dieser stehenden Fahrzeug (1) mit mindestens einer Sekundärinduktivität (4), wobei die stationäre Einheit eine Einrichtung (12, 13, 14; 2, 16, 14) zur Detektion des Vorhandenseins eines elektrisch leitfähigen metallischen Gegenstandes (11) innerhalb eines vorbestimmten, an die Primärinduktivität (2) angrenzenden und während der induktiven Energieübertragung zwischen der Primärinduktivität (2) und der Sekundärinduktivität (4) liegenden Raumes aufweist, **dadurch gekennzeichnet, dass** die Einrichtung mindestens eine Messinduktivität (12), die separat von der Primärinduktivität (2) ausgebildet und benachbart zu der Primärinduktivität (2) auf derjenigen Seite der Primärinduktivität (2) angeordnet ist, welche während der induktiven Energieübertragung der Sekundärinduktivität (4) zugewandt ist, eine Messeinrichtung (13; 16) zur Messung der Impedanz der Messinduktivität (12) und eine mit der Messeinrichtung (13; 16) verbundene Auswertungseinrichtung (14) aufweist, dass eine Vielzahl von Messinduktivitäten (12) vorgesehen sind, die eine regelmäßige zweidimensionale Anordnung bilden, die sich zumindest annähernd in einer Ebene erstreckt, welche senkrecht zur Hauptrichtung des von der Primärinduktivität (2) im Betrieb erzeugten Magnetfeldes (9) liegt, und dass anhand der Verteilung der Vielzahl von Messinduktivitäten (12) Rückschlüsse auf die Größe und die Position des metallischen Gegenstandes (11) gezogen werden und somit eine näherungsweise Positionsbestimmung des metallischen Gegenstandes erfolgt.

2. Vorrichtung nach Anspruch 1, **dadurch gekennzeichnet, dass** die Messinduktivitäten (12) als planare Spulen ausgebildet sind.

3. Vorrichtung nach Anspruch 1 oder 2, **dadurch gekennzeichnet, dass** die Messinduktivitäten (12) in Form einer Matrix mit jeweils gleichem Rastermaß innerhalb der Reihen und Spalten der Matrix angeordnet sind.

4. Vorrichtung nach Anspruch 4 einem der Ansprüche 1 bis 3, **dadurch gekennzeichnet, dass** aufeinanderfolgende Reihen von Messinduktivitäten (12) jeweils in ihrer Längsrichtung um das halbe Rastermaß einer Reihe gegeneinander versetzt sind.

5. Vorrichtung nach einem der Ansprüche 1 bis 4, **dadurch gekennzeichnet, dass** die Messinduktivitäten (12) dergestalt zu Gruppen zusammengeschaltet sind, dass nur die resultierenden Impedanzen der Gruppen messbar sind.

6. Vorrichtung nach einem der Ansprüche 1 bis 5, **dadurch gekennzeichnet, dass** jeder einzelnen Messinduktivität (12) oder jeder Gruppe von Messinduktivitäten eine eigene Impedanzmesseinrichtung (13) zugeordnet ist.

7. Vorrichtung nach einem der Ansprüche 1 bis 5, **dadurch gekennzeichnet, dass** mehrere einzelne Messinduktivitäten (12) oder Gruppen von Messinduktivitäten (12) über einen Analogmultiplexer mit einer gemeinsamen Impedanzmesseinrichtung verbunden sind.

8. Vorrichtung nach einem der Ansprüche 1 bis 7, **dadurch gekennzeichnet, dass** die Auswertungseinrichtung (14) eine Verteilung der Impedanzen der einzelnen Messinduktivitäten (12) oder Gruppen von Messinduktivitäten (12) mit einer Referenzverteilung vergleicht, und dass sie mindestens einen Ausgang aufweist, an dem ein Signal ausgegeben wird, welches das Vorliegen einer Abweichung vorbestimmten Ausmaßes anzeigt.

9. Vorrichtung nach Anspruch 8, **dadurch gekennzeichnet, dass** ein Ausgang der Auswertungseinrichtung (14) mit einer Anzeigeeinrichtung (15) verbunden ist, und dass ein an dem Ausgang ausgegebenes Signal die Ausgabe eines Warnsignals durch die Anzeigeeinrichtung (15) auslöst.

10. Vorrichtung nach Anspruch 8 oder 9, **dadurch gekennzeichnet, dass** ein Ausgang der Auswertungseinrichtung (14) mit einer Steuereinheit (7), welche eine Stromversorgungseinheit (6) der Primärinduktivität (2) steuert, verbunden ist, und dass ein an dem Ausgang ausgegebenes Signal eine Deaktivierung der Stromversorgungseinrichtung (6) durch die Steuereinrichtung (7) auslöst.

11. Vorrichtung nach einem der Ansprüche 8 bis 10, **dadurch gekennzeichnet, dass** die Auswertungseinrichtung (14) zur Erkennung eines elektrisch leitfähigen Gegenstandes in Form eines Fahrzeugs (1) anhand der ermittelten Impedanzverteilung eingerichtet ist, und dass ein von ihr ausgegebenes Signal anzeigt, ob als Gegenstand ein Fahrzeug (1) erkannt wurde.

## Claims

1. Device for inductive transfer of electrical energy from a stationary unit with at least one primary induction coil (2) to a vehicle (1) standing adjacent to this with at least one secondary induction coil (4), wherein the stationary unit has an arrangement (12, 13, 14; 2, 16, 14) for detecting the presence of an electrically conductive metallic object (11) within a predetermined space adjacent to the primary induction coil (2) and lying between the primary induction coil (2) and the secondary induction coil (4) during the inductive transfer of energy, **characterised in that** the arrangement has at least one measuring induction coil (12) which is formed separate from the primary induction coil (2) and disposed adjacent to the primary induction coil (2) on the side of the primary induction coil (2) which faces the secondary induction coil (4) during the inductive transfer of energy, a measuring means (13; 16) for measuring the impedance of the measuring induction coil (12) and an evaluating means (14) connected to the measuring means (13; 16), **in that** a multiplicity of measuring induction coils (12) are provided which form a regular two-dimensional arrangement which extends at least roughly in a plane which lies perpendicular to the main direction of the magnetic field (9) produced by the primary induction coil (2) while in operation, and **in that** using the distribution of the multiplicity of measuring induction coils (12), conclusions are drawn on the size and the position of the metallic object (11) and hence an approximate position determination of the metallic object takes place.

2. Device according to claim 1, **characterised in that** the measuring induction coils (12) are embodied in the form of planar coils.

3. Device according to claim 1 or 2, **characterised in that** the measuring induction coils (12) are arranged in the form of a matrix with in each case a uniform grid spacing within the rows and columns of the matrix.

4. Device according to one of claims 1 to 3, **characterised in that** successive rows of measuring induction coils (12) are offset by half the grid spacing of a row in their longitudinal direction in each case.

5. Device according to one of claims 1 to 4, **characterised in that** the measuring induction coils (12) are connected together in groups in such a way that only the resulting impedance values of the groups can be measured.

6. Device according to one of claims 1 to 5, **characterised in that** each individual measuring induction coil (12) or each group of measuring induction coils is assigned its own impedance measuring means (13).

7. Device according to one of claims 1 to 5, **characterised in that** a plurality of individual measuring induction coils (12) or groups of measuring induction coils (12) are connected by means of an analogue multiplexer with a common impedance measuring means.

8. Device according to one of claims 1 to 7, **characterised in that** the evaluating means (14) compares a distribution of the impedance values of the individual measuring induction coils (12) or groups of measuring induction coils (12) with a reference distribution, and **in that** it has at least one output at which a signal is outputted which indicates the presence of a deviation of predetermined extent.

9. Device according to claim 8, **characterised in that** an output of the evaluating means (14) is connected with an indicating means (15), and **in that** a signal outputted at the output triggers the emission of a warning signal by the indicating means (15).

10. Device according to claim 8 or 9, **characterised in that** an output of the evaluating means (14) is connected with a control unit (7) which controls a current supply unit (6) of the primary induction coil (2), and **in that** a signal outputted at the output triggers a deactivation of the current supply means (6) by the control means (7).

11. Device according to one of claims 8 to 10, **characterised in that** the evaluating means (14) is configured to recognise an electrically conductive object in the form of a vehicle (1) by reference to the determined impedance value distribution, and **in that** a signal outputted by it indicates whether a vehicle (1) has been recognised as the object.

## Revendications

1. Dispositif de transmission inductive d'énergie électrique d'une unité stationnaire avec au moins une inductance primaire (2) à un véhicule (1) situé de manière adjacente à celle-ci avec au moins une inductance secondaire (4), dans lequel l'unité stationnaire présente un équipement (12, 13, 14 ; 2, 16, 14) de détection de la présence d'un objet électro-conducteur métallique (11) à l'intérieur d'un espace prédéterminé, attenant à l'inductance primaire (2) et situé pendant la transmission inductive d'énergie entre l'inductance primaire (2) et l'inductance secondaire (4), **caractérisé en ce que** l'équipement présente au moins une inductance de mesure (12), qui est réalisée séparément de l'inductance primaire (2) et agencée de manière adjacente à l'inductance primaire (2) sur le côté de l'inductance primaire (2), qui est tourné vers l'inductance secondaire (4) pendant la transmission inductive d'énergie, un équipement de mesure (13 ; 16) pour la mesure de l'impédance de l'inductance de mesure (12) et un équipement d'évaluation (14) relié à l'équipement de mesure (13 ; 16), qu'une pluralité d'inductances de mesure (12) sont prévues, lesquelles forment un agencement bidimensionnel régulier, qui s'étend au moins approximativement dans un plan, qui se situe perpendiculairement à la direction principale du champ magnétique (9) généré par l'inductance primaire (2) en fonctionnement, et qu'au moyen de la distribution de la pluralité d'inductances de mesure (12), des conclusions sur la grandeur et la position de l'objet métallique (11) sont tirées et ainsi une détermination de position approximative de l'objet métallique est effectuée.

2. Dispositif selon la revendication 1, **caractérisé en ce que** les inductances de mesure (12) sont réalisées sous forme de bobines planes.

3. Dispositif selon la revendication 1 ou 2, **caractérisé en ce que** les inductances de mesure (12) sont agencées sous la forme d'une matrice avec respectivement la même dimension modulaire à l'intérieur des lignes et des colonnes de la matrice.

4. Dispositif selon l'une quelconque des revendications 1 à 3, **caractérisé en ce que** des lignes successives d'inductances de mesure (12) sont décalées l'une par rapport à l'autre respectivement dans leur sens longitudinal de la demi-dimension modulaire d'une ligne.

5. Dispositif selon l'une quelconque des revendications 1 à 4, **caractérisé en ce que** les inductances de mesure (12) sont interconnectées en groupes de telle manière que seules les impédances résultantes des groupes sont mesurables.

6. Dispositif selon l'une quelconque des revendications 1 à 5, **caractérisé en ce qu'**un équipement de mesure d'impédance propre (13) est attribué à chaque inductance de mesure (12) individuelle ou à chaque groupe d'inductances de mesure.

7. Dispositif selon l'une quelconque des revendications 1 à 5, **caractérisé en ce que** plusieurs inductances de mesure (12) individuelles ou groupes d'inductances de mesure (12) sont reliés à un équipement de mesure d'impédance commun par le biais d'un multiplexeur analogique.

8. Dispositif selon l'une quelconque des revendications 1 à 7, **caractérisé en ce que** l'équipement d'évaluation (14) compare une distribution des impédances des inductances de mesure (12) individuelles ou groupes d'inductances de mesure (12) avec une distribution de référence, et **en ce qu'**il présente au moins une sortie, au niveau de laquelle un signal est émis, lequel indique la présence d'un écart d'une dimension prédéfinie.

9. Dispositif selon la revendication 8, **caractérisé en ce qu'**une sortie de l'équipement d'évaluation (14) est reliée à un équipement d'affichage (15), et **en ce qu'**un signal émis à la sortie déclenche l'émission d'un signal d'avertissement par l'équipement d'affichage (15).

10. Dispositif selon la revendication 8 ou 9, **caractérisé en ce qu'**une sortie de l'équipement d'évaluation (14) est reliée à une unité de commande (7), laquelle commande une unité d'alimentation électrique (6) de l'inductance primaire (2), et **en ce qu'**un signal émis à la sortie déclenche une désactivation de l'équipement d'alimentation électrique (6) par l'unité de commande (7).

11. Dispositif selon l'une quelconque des revendications 8 à 10, **caractérisé en ce que** l'équipement d'évaluation (14) est aménagé pour la détection d'un objet électro-conducteur sous la forme d'un véhicule (1) à l'aide de la distribution d'impédance déterminée, et **en ce qu'**un signal émis par celui-ci indique si un véhicule (1) a été détecté comme objet.
